# EUROPEAN PATENT APPLICATION

(11) **EP 0 696 842 A1**
(43) Date of publication of application: **14.02.1996**
(21) Application number: 95112538.4
(22) Date of filing: 09.08.1995
(51) Int. Cl.: H02P 1/26, H02M 5/458, H02H 7/08, H02H 7/085, F04D 15/00

(54) **Inverter for pumps and a pump unit therewith**

(30) Priority: 11.08.1994 JP 210661/94
(71) Applicant: EBARA CORPORATION, Ohta-ku Tokyo (JP); EBARA DENSAN LTD., Tokyo (JP)
(72) Inventor: Yamamoto, Masakazu, c/o Ebara Research Co., Ltd., Fujisawa-shi, Kanagawa-ken (JP); Miyake, Yoshio, c/o Ebara Research Co., Ltd., Fujisawa-shi, Kanagawa-ken (JP); Isemoto, Koji, c/o Ebara Research Co., Ltd., Fujisawa-shi, Kanagawa-ken (JP); Uwai, Keita, c/o Ebara Research Co., Ltd., Fujisawa-shi, Kanagawa-ken (JP); Miyazaki, Yoshiaki, c/o Ebara Research Co., Ltd., Fujisawa-shi, Kanagawa-ken (JP); Choshitani, Hitoshi, c/o Ebara Densan Ltd., Fujisawa-shi, Kanagawa-ken (JP)
(74) Representative: Wagner, Karl H.

(57) **Abstract**

An inverter unit having a simple circuit configuration which provides reliable control over the performance of a fluid handling pump is presented. An application of the inverter unit to a motor-driven peripheral flow type pump is demonstrated. The inverter unit is constructed so that the inverter unit isolates a three-phase commercial alternative power source from the pump driving alternative power source such that the problems, such as a misconnection of phase relationship, in the commercial power source do not affect the performance of the motor. The pump is powered by an internally-generated power produced within the inverter unit. The inverter unit thus includes: a converter section which rectifies the three-phase commercial power and converts the alternating current power to direct current power; and an inverter section which generates pulse signals having specific frequency and voltage values using the direct current power produced in the converter section. The three-phase alternating current thus generated by the inverter unit are applied to the motor, independent of the phases in the commercial three-phase alternative power source, so as to produce optimum performance of the motor in each of the start-up, steady-state and stopping stages. The pump is thus able to perform reliably at its peak efficiency without the problems encountered in the pumps incorporating conventional inverters.

## Description

### Background of the Invention

### Field of the Invention:

The present invention relates to an inverter unit for use in motor driven pumps and a fluid handling pump provided with the inverter unit.

### Technical Background:

Conventional inverter units which convert commercial electrical power to generate output power of desired frequency and voltage are well known, and are used widely in such applications as energy conservation of power in electrically-driven fluid pumps. In recent years, so-called "inverter pumps" having a dedicated internal inverter have appeared in the marketplace. However, such "inverter pumps" are merely an existing inverter unit incorporated in a motor-equipped pumping device, and represent a simple combination of two independently functioning devices. The conventional inverter unit is built to freely vary the rotational speed of the motor and the power supply voltage thereto. To achieve this end, the conventional inverter unit is provided with microcomputers and other functions in the circuit, and although a number of functions can be provided, the device structure becomes complex and the final equipment cost high. Because the device becomes complex, operational problems, such as vulnerability to circuit tripping, are often encountered.

Furthermore, to provide overcurrent and phase interruption protection in the conventional pumps, it is necessary to employ current detector, voltage detector and circuit breaker and the like auxiliary devices between the inverter unit and the commercial power source or between the inverter unit and the motor. The result is that the peripheral circuits around the inverter unit become complex, and the size of the final operating unit becomes large and cumbersome.

Thus, in spite of the high potential of the conventional inverter units, it is difficult to fully utilize their latent capabilities, and in particular, the conventional inverters are unsuitable when the application requires an alternating power source which can provide smooth control of pump speed but can also stop the motor in an emergency.

### Summary of the Invention

It is an object of the present invention to provide a dedicated inverter unit having relatively simple circuitries for protecting and controlling a pump and its drive motor, and to ensure an application of the inverter unit to a fluid handling pump to achieve high performance characteristics while maintaining reliability of the overall pumping system.

The object is achieved in an inverter comprising: a converter section for rectifying a three-phase commercial power and converting to a direct current (DC) power; and an inverter section for generating a three-phase alternating current (AC) power having a specific frequency value and a specific voltage value, from the DC power produced in the converter section; wherein the three-phase AC power provides alternating power of a defined phase relationship to the electric motor in accordance with signals from a controller device, independently of the connecting lines of the three-phase commercial power.

The inverter unit so constructed outputs an AC power having required frequency and voltage values according to an internally generated DC power. Therefore, the input power to the motor is independent of the phase connecting relationship of the commercial power source, and the inverter unit delivers a three-phase alternating power of appropriate characteristics to the motor. Therefore, there is no fear of reverse rotation of the impeller caused by phase inversion in the power supply, thus preventing the attendant operational problems, such as insufficient fluid volume delivery and impeller fallout caused by loose nuts, which are known to happen in the fluid handling pumps having a conventional inverter.

An aspect of the inverter unit is that provided with control means for commanding the specific frequency value and the specific voltage value generated by the inverter unit; and soft-start means for controlling the inverter unit so as to provide, within a pre-determined time interval, a gradual increase in the power applied to the electric motor up to the specific frequency and the specific voltage, during a time span required for the electric motor to reach a full running stage.

The soft-start capability of the inverter unit is an important feature which prevents overheating of the motor caused by rushing current even under frequent stop-start operations. The soft-start capability allows a gradual increase in the rotational speed thus reducing severe pressure variations in the piping and the attendant breakdown in the peripheral components due to mechanical fatigue. The soft-start is also effective in preventing fatigue loading on the main shaft or impeller boss because of elimination of high starting torque.

Another aspect of the inverter unit is that the inverter unit is further provided with control means for commanding the specific frequency value and the specific voltage value generated by the inverter unit; and a soft-stop function for controlling the inverter unit so as to provide, within a pre-determined time interval, a decrease in the power applied to the electric motor from the specific frequency and the specific voltage during a time span required for the electric motor to come to a full stop.

The soft-stop capability prevents a sudden stopping of the motor and the pump, and therefore it is also effective in preventing severe pressure variations in the piping and the attendant problem of fatigue failure of the peripheral components.

Another aspect of the inverter unit is that an overcurrent detection means is provided for reducing an output current level of the inverter unit when overcurrent is detected.

The overcurrent protection is effective in preventing overcurrent flow in the motor and the attendant failure of the pump due to over fluid loading and higher than normal current flow in the motor, by lowering the output current from the inverter unit in such emergencies.

Another aspect of the inverter unit is that a means is provided to reduce output frequency and voltage values from the inverter unit so as to obtain a pre-determined standard current value when overcurrent is detected.

When overcurrent is detected, this aspect of the fluid pump unit allows the frequency to be lowered to restore a standard current value to protect the motor and the inverter unit. Therefore, even if the motor should become overloaded, the pump, the motor and the inverter unit are protected from damage by reducing the output frequency of the inverter unit and lowering the rotational speed of the motor.

Another aspect of the inverter unit is that a means is provided for detecting an open-phase condition in the primary and the secondary circuits of the inverter unit and stopping the electric motor when the open-phase condition is detected.

This provision in the primary and the secondary circuits of the inverter unit allows the motor to be stopped for protection, should a phase interruption condition is detected in the primary and/or the secondary circuits of the inverter unit. This feature of the inverter also prevents violent pressure changes in the intake side of the main pipe which can generate a phenomenon of "hammering" and the attendant damage to the peripheral components.

Another aspect of the inverter unit is that a means is provided for detecting a no-load condition and stopping the electric motor when the no-load condition is detected.

This aspect of the fluid pump unit is effective in preventing no-load operation of the pump which can cause bearing damage, particularly in those sealed-pumps having self-lubricating bearings.

Another aspect of the inverter unit is that a current detector is provided for stopping an output power to the fluid handling pump when a measured current value is lower than a pre-determined value of current.

This aspect of the fluid pump unit is effective in preventing damage to the pump when no-load condition occurs when the pump is operating at the standard conditions of frequency and voltage by detecting that the operating current is lower than a standard pre-determined current value.

Another aspect of the inverter unit is that the time span for the motor starting includes a period in which the inverter unit outputs constant values of frequency and voltage, and a means is provided for detecting that a value of the current during the period is lower than a pre-determined value of the current and stopping delivery of the three-phase driving power to the electric motor.

This aspect of the fluid pump unit of detecting no-load operation in the soft-start stage is effective in preventing damage to the pump when the pump is still in the start-up stage and has not fully reached the highspeed under the standard operating condition of the pump. This feature is especially useful in preventing damage caused by no-load operation to self-lubricating bearings made of hard but brittle materials, such as SiC.

Another aspect of the inverter unit is that the fluid handling pump is provided with a fluid level detector for detecting no-load condition in the fluid handling pump and stopping delivery of output power to the electrical motor.

This provision of the inverter unit is effective in totally eliminating no-load operation of the pump by ascertaining that load is present in the pump.

Another aspect of the inverter unit is that the stator winding of the electrical motor is provided with a thermal protector means for detecting a temperature of the stator winding so as to stop delivery of output power to the electrical motor when the temperature of the winding exceeds a pre-determined temperature.

This provision of the inverter unit is effective in preventing damage to the pump by stopping the motor when a temperature rise is detected in the winding caused by a closed operation of the pump, or high temperature flowing in the pump.

Another aspect of the inverter unit is that the inverter unit generates output signals, comprising an output frequency value and an output voltage value, which are unilaterally-determined.

This aspect of determining the relationship unilaterally allows elimination of unnecessary functions in the inverter unit. This contributes to reducing potential for causing damage to the pump caused by erroneous operation of the inverter unit by the user. Elimination of unnecessary functions in the inverter reduces production cost, and allows the limited program space of the inverter unit to be used for more critical functions of the pump operation.

The final aspect of the inverter unit is that the inverter unit generates an output signal relating an output frequency value and an output voltage value in a digital form, not in an analogue form.

This aspect of the inverter unit also allows more effective use of the memory space by eliminating unnecessary functions in the conventional inverters for pump applications, thus leading to lower production cost and an improved allocation of functions.

The invention also claims a fluid handling pump provided with the inverter unit having one or more of the aspects presented above, wherein the fluid handling pump is a peripheral flow type pump.

The application of the inverter unit to a peripheral flow type pump is an important advantage in safe operation of the pump because the inverter unit prevents reverse rotation of the pump caused by phase inversion. It is usually difficult to ascertain the direction of rotation in the peripheral flow type pumps, and elimination of possible reverse rotation is an important reliability factor in the operation of this type of pump. The thermal protector is also useful in preventing damage in the peripheral flow type pumps, because these pumps are vulnerable to fluid temperature rise caused by a closed operation of the pump.

An aspect of the fluid handling pump provided with the inverter unit is that the fluid handling pump is provided with a hermetically sealed motor having self-lubricating bearings.

This aspect of the pump having a sealed motor with self- lubricating bearings is important, because the inverter unit protects the self-lubricating bearings by stopping the motor in the case of no-load operation of the pump.

Another aspect of the fluid handling pump provided with an inverter unit is that the inverter unit is disposed on an external surface of the peripheral flow type pump.

This aspect of the location of the inverter unit on the pump is a feature which assures simple cooling of the inverter unit, thereby contributing to the overall reliability of the pump operation by eliminating possible malfunctioning caused by overheating of the inverter unit.

The final aspect of the fluid handling pump provided with the inverter unit is that the inverter unit is disposed in an area of the fluid handling pump not adversely affected by discharge pressure of the peripheral flow type pump.

This aspect of the location of the inverter unit on an area of the pump which is free from the effects of the discharge pressure is a feature which assures proper functioning of the inverter unit, thereby contributing to the overall reliability of the pump operation.

### Brief Descriptions of the Drawings

Figure 1 is a cross sectional view of a pump unit having an embodiment of the inverter unit of the present invention.

Figure 2 is a block diagram of the circuit configuration of the inverter unit of the embodiment.

Figure 3 is a graph showing an example of a soft-start function of the inverter unit.

Figure 4 is a graph showing an example of a soft-stop function of the inverter unit.

Figure 5 is a block circuit diagram of a PWM signal generator of the inverter unit of the embodiment.

Figure 6 is an example of a ROM map.

Figure 7 is an illustration of the PWM waveforms during the steady-state stage of the inverter unit shown in Figure 5.

### Preferred Embodiment

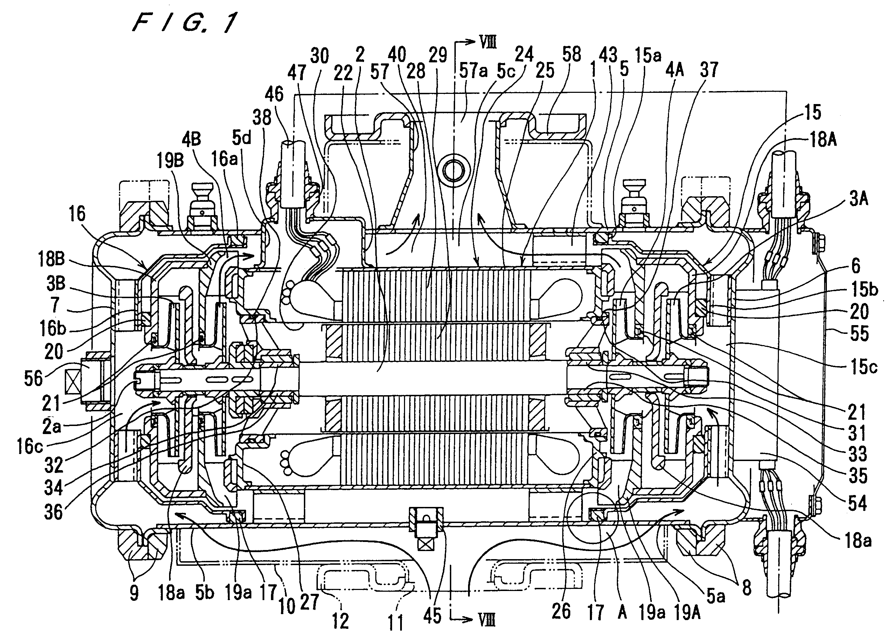

An embodiment of the present invention will be explained in the following with reference to Figures 1 to 7.

Figure 1 is a cross sectional view of a peripheral flow type, double intake pump having a hermetically sealed motor 1 in the central section, and there are disposed fixed impellers 3A, 4A; 3B, 4B, respectively at each end of the main shaft 2 of the sealed motor 1, having an intake section which is open to the outer axial direction of the main shaft 2. The pump sections provided on both ends of the sealed motor 1 have the same cut-off suction volume but their flow rates are different. The sealed motor 1 and the impellers 3A, 4A; 3B, 4B are housed in an outer tube 5 and the left, right covers 6, 7, respectively. The outer tube 5 and the cover 6 on the one hand, and the outer tube 5 and the cover 7 are, respectively fixated with flanges 8, 9. Each of the vanes on the impellers 3A, 4A; 3B, 4B is made of metal strips.

The outer tube 5 is provided with intake ports 5a, 5b near the ends thereof, and an intake casing 10 is provided on the outside of the outer tube 5 to connect the intake ports 5a, 5b. The intake casing 10 has an intake opening 11 in the center section. To prevent the formation of air pockets in the intake casing 10, the widths in the circumferential direction of the intake ports 5a, 5b on the outer section of the outer tube 5 are made to correspond to the width of the intake casing 10. The intake opening 11 is provided with an intake flange 12.

On the inside of the outer tube 5, partition plates 15, 16 are fixed in place. The partition plates 15, 16 are provide with fixed seals 17 made of an elastic material such as rubber at the opening sections 15a, 16a, and the bottom sections 15b, 16b are provided with intake openings 15c, 16c, respectively.

The inside of the partition plates 15, 16 are provided respectively with a first inner casings 18A, 18B and second inner casings 19A, 19B. The first inner casing 18A, 18B have returning vanes 18a, and the second inner casing 19A, 19B have a number of guiding devices 19a for comprising guide vanes or volute. The second inner casings 19A, 19B are provided with in-line coupling section which couples with the motor frame 24 of the sealed motor 1. Each of the spaces between the first inner casings 18A, 18B and the partition plates 15, 16 is intervened with a sealing member 20. The sealing member provides a seal tight separation between the intake side (low pressure) and the discharge side (high pressure). A liner ring 21 is disposed on each of the inside spaces of the first and second casings, 18A, 18B; 19A, 19B.

The motor frame 24 of the sealed motor 1 comprises an outer frame shell 25 and the frame side plates 26, 27 disposed on both opening sections of the outer frame shell 25. A cable housing 22 is firmly welded to the outer frame shell 25, and serves to contain lead wires to the outside connections while also housing a power supply cable 46 on the inside thereof. A cable connector 47 is welded to the cable housing 22 for holding the power supply cable 46.

A stator 28 and a rotor 29 are housed in the inside of the motor frame 24. The rotor 29 is supported on the main shaft 2, and the stator 28 is coupled with a cylindrical can 30 on the inside thereof.

The frame side plates 26, 27 are respectively provided with detachable bearing housings 31, 32, which support the respective radial bearings 33, 34. The radial bearing 33 permits the rotation of a shaft sleeve 35 coupled to the main shaft 2, and the radial bearing 34 permits the rotation of a shaft sleeve 36 coupled to the main shaft 2. The fixation of the bearing housings 31, 32 to the frame side plates 26, 27 is provided by the space-filling in-line couplings and O-rings 37, 38 made of an elastic material.

Thus, a ring-shaped space 40 is formed between the outer tube 5 and the motor frame 24 of the sealed motor 1, and an opening 5c is formed at the outer section of the outer tube 5, and a discharge nozzle 41 is fixed to the opening section. The discharge nozzle 41 is provided with a discharge opening 41a and a fixed discharge flange 42.

Further in this embodiment, an inverter unit 54 is fixed on a cover 6 which closes one end of the outer tube 5, as shown in Figure 1, and a cover 55 cover the inverter unit 54. The inverter unit 54 is fixed onto the cover 6 which is in contact with a fluid being handled and is effectively cooled therewith. Because highly integrated semiconductor circuits which are fixed in the inverter unit, are susceptible to the effects of external forces and vibrations, and from this viewpoint, it is preferable that the inverter unit is attached to the outer surface of the cover 6 which is only subjected to intake pressures rather than the outside surface of the outer tube which is subjected to discharge pressures (the outer tube may deform under the effect of the discharge pressure).

Next, the operation of the dual intake pump having the construction features presented above will be explained.

A fluid stream flowing in from the intake opening 11 is divided into left/right directions by the intake casing 10 and enters the pump section through the intake ports 5a, 5b. The fluid streams entering the pump section through the intake openings 15c, 16c formed by the partition plates 15, 16 are pressurized by the impellers 3A, 3B; 4A, 4B. The fluid streams discharged from the impellers 4A, 4B passes through the respective guiding devices 19a, 19b, and, change the flow direction from the centrifugal direction to the axial direction, after which they flow into the ring-shaped passage 40 formed between the outer tube 5 and the motor frame 24 of the sealed motor 1, and merge together while flowing through the passage 40. The merged fluid stream is ultimately discharged from the discharge opening 41a after passing through the discharge nozzle 41 protruding from the opening 5c of the outer tube 5.

According to the embodiment, the circumferential periphery of the motor frame shell 25 is surrounded on all sides by the fluid, thus receiving a uniform pressure and no non-uniform distortion or deformation is generated. Also, because the partition walls 15, 16 are formed on the inner peripheral section of the outer tube 5, the inner section of the outer tube is divided into the intake pressure side and the discharge pressure side, thereby equalizing the pressure distribution in the radial and circumferential directions within the inner tube section.

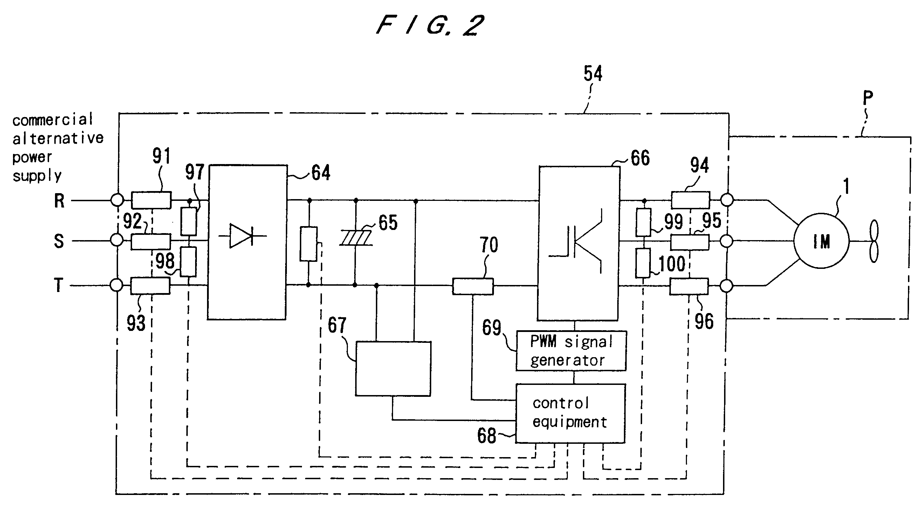

Figure 2 is a block diagram showing the circuit configuration of the inverter unit 54.

The input side of the inverter unit 54 is connected to a three-phase commercial power sources R, S and T, and the output side of the inverter unit 54 is connected to the motor 1 housed in the pump P. The inverter unit 54 comprises a converter section 64 which rectifies the three-phase alternating power to generate a direct power; a smoothing capacitor 65 for storing the direct power; and an inverter section 66 for transforming the direct current (DC) into a three-phase alternating current having specific frequency and voltage values. The inverter section 66 is a pulse width modulation (PWM) type inverter, and operates by opening or closing the power switching element, such as a power transistor, in accordance with the signals from a PWM signal generator 69, thereby generating an alternating power of specific frequency and voltage values and supplying the alternating current (AC) to the motor 1.

A control device 68 regulates the supply of electrical power from the inverter unit 54 to the sealed motor 1 by controlling the actions of the PWM signal generator 69. The current detectors 91, 92 and 93 provided on the side of the commercial power source detect the current in each of the phases R, S and T, and transmit the data to the control device 68. Similarly, the current detectors 94, 95 and 96 detect the current flowing in each of the phases generated from the output side of the inverter unit 54 to the motor 1, and transmit the data to the control device 68. The voltage detectors 97, 98 connected across the phases in the input side of the inverter unit 54 measure the inter-phase voltages and transmit the data to the control device 68. The voltage detectors 99, 100 connected across the phases on the output side of the inverter section 66 measure the inter-phase voltages on the output side, and transmit the data to the control device 68. An auxiliary power source 67 supplies electrical power to the control device 68.

The converter section 64, provided within the inverter unit 54 of the circuit construction presented above, performs the function of rectification, and the commercial three-phase power source on the input side is rectified and converted into DC. This DC power is converted into an alternating current (AC) power of specific frequency and voltage values by the inverter section 66 in accordance with the signals from the PWM signal generator 69. It follows, therefore, that the phase relationships of the output voltages supplied to the motor 1 from the inverter unit 54 are independent of the phase relationships of the three-phase commercial power source, and that the direction of pump revolution is determined solely by the phase relationships of the output voltages from the inverter section 66. Therefore, even if there is an error in the phase connecting lines in the three-phase commercial power source, a problem such as the motor 1 rotating in the reverse direction can never present itself. Therefore, the inverter unit 54 is significantly effective in preventing a reverse operation of the pump P caused by mis-connection in the power input side.

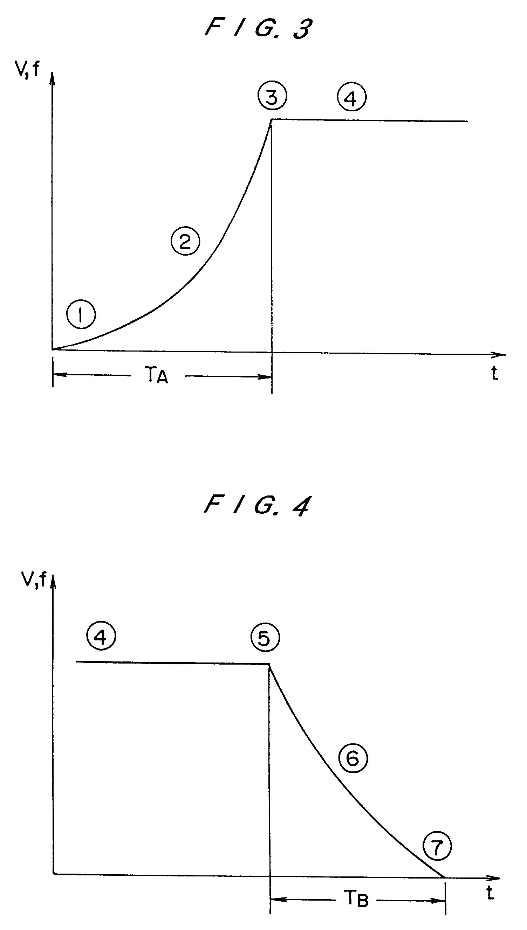

Next, the inverter section 66 of the inverter unit 54 generates AC of specific frequency and voltage values in accordance with the signals from the PWM signal generator 69 and supplies the AC current to the motor 1. An example of the construction and the action of the PWM signal generator 69 will be explained with reference to Figures 3 to 7.

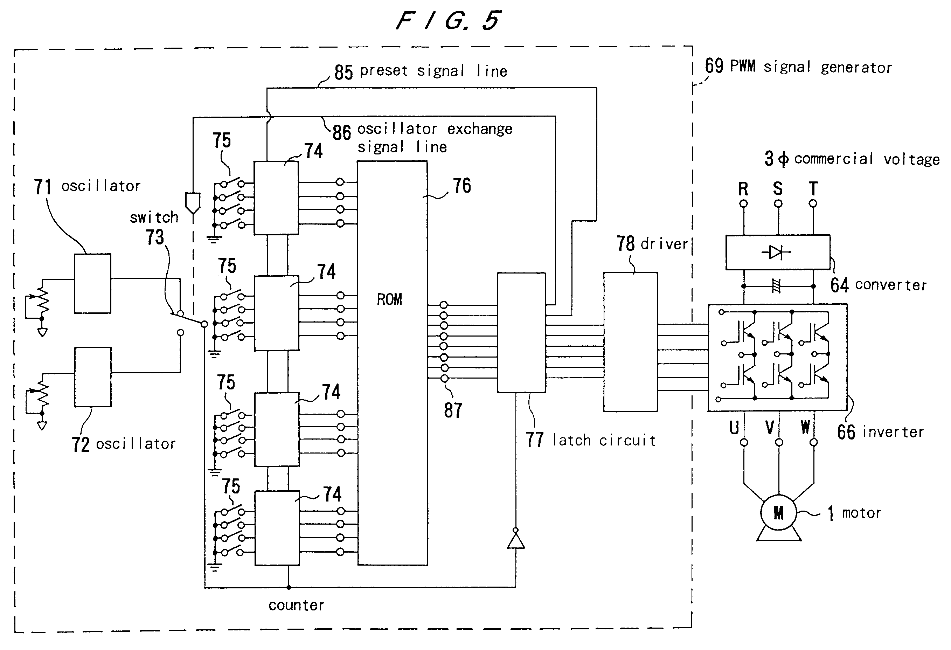

Figure 5 is a block diagram of the PWM signal generator of the PWM inverter. The oscillator 71 has a relatively slow speed clock frequency (10 KHz), and is used during the acceleration stage. The oscillator 72 has a relatively fast speed clock frequency (200 KHz), and is used during the steady speed stage. The switch 73 is for switching the oscillators between the acceleration and steady speed stages of the motor operation, and the selection of the oscillator is performed through the oscillator switching signal line 86. The counter 74 is a pre-settable 4-bit-counter having a serial-in and parallel-out configuration. The pre-setting of the counter 74 is performed by a pre-setting circuit 75. The output data from the four 4-bit counter are inputted into the addresses of a read only memory (ROM) 76.

A semiconductor element of ROM 76 is disposed on the printed circuit board through a socket having a connection section 87. Therefore the lead terminals of ROM 76 can be readily removed or inserted through the socket for easy interchanging. In other words, the ROM can be easily exchanged when necessary. In another example, the connection section 87 is made to accept insertion of a memory card having a ROM program. Therefore, by exchanging the memory card, it is possible to switch the ROM program. The ROM can be either a fixed memory ROM or an electrically-erasable ROM (EPROM).

The ROM 76 comprises a 64k word x 8 bit configuration with an 8-bit parallel output terminal. The 8-bit output data is inputted into a latching circuit 77 to be latched. One bit (D7) of the 8-bit output from the ROM 76 is connected to the switching line 86 of the oscillator, and switches between the relatively slow speed oscillator 71 and the relatively fast speed oscillator 72. The other one bit (D8) of the 8-bit output from the ROM 76 is connected to the pre-setting signal line 15, and sets the counter 74 to a value specified by the pre-setting circuit 75. Thus, when this bit turns to [1] according to an address of the ROM 76, the counter is preset, and the readout address in the ROM moves to the address specified in the pre-setting circuit 75.

The remaining six output bits (D5-D0) of the 8-bit ROM 76 are PWM signal data for driving the motor of the PWM inverter. The 6-bit PWM signals are latched by the latching circuit 77 and are inputted into the driver 78. The driver 78 converts a width modulated signal comprised of the 6-bit digital signals to an analogue signal comprised of corresponding time widths. Thus, by turning ON the transistors and the like in the inverter section 66 for a specified pulse duration, the pulse signal having the time interval specified by the PWM digital pulse signal is supplied to the inverter section 66, and the DC voltage having the required pulse width is applied to the motor 1. The converter section 66 generates the DC source voltage by rectifying the three-phase commercial power source. That is, the inverter section 66 is given the DC power produced by the converter section 64 from rectified commercial power source, and applies a DC pulse of a duration determined by the PWM signal to the motor 1. Here, the motor 1 is an inductive type load, and the current waveform in the motor 1 is close to a sine curve.

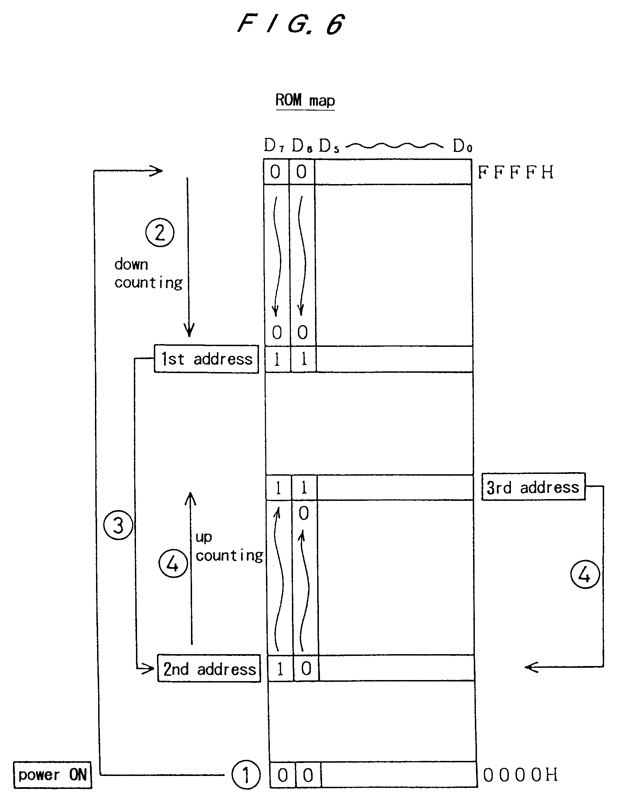

Figure 6 explains a ROM map which is contained in the ROM 76. The bit D7 is an oscillator switching signal and [0] signifies the selection of the relatively slow speed oscillator 71 (10 KHz) and [1] signifies the selection of the relatively fast speed oscillator 72 (200 KHz). D5 is a preset signal, and when this signal is [1], the counter 74 is set to a pre-selected value in the presetting circuit 75. That is, the output of the counter becomes the preset value, and therefore the address in the ROM 76 moves to the preset value. D5-D0 are 6-bit digital PWM signals to correspond to the pulse time widths to be applied to the motor 1.

Memory address is expressed as a 16-bit symbol (H) whose bottom-most layer is 0000H. The sequence of stages in the operation of the motor 1 are as follows.

Stage (1), at the time of power-ON, a counter-clear signal is started with memory address at 000H. At the start-up, D7 is [0], and the relatively slow speed oscillator 71 is selected.

Stage (2), the square waves from the oscillator 71 are count-down with the counter 74 to progressively move down the address. From D5-D0 in each of the memory addresses, PWM signals are outputted, and the DC voltage pulse to correspond with the time widths of the digital PWM signals are applied to the motor 1. In the start-up stage, initial pulses have narrow widths to avoid a surging current, and by increasing the pulse width gradually, the motor speed is increased smoothly.

As the down-count by the counter 74 progresses and the memory address gradually moves downward, the PWM signals D5-D0 gradually raise the rotational frequency for the motor and, proportionately, raise the equivalent sine wave voltages to be impressed on the motor. That is, by making a ratio V/f (where V is the voltage and f is the frequency) to be a constant, a surging current during the acceleration stage is avoided and smooth acceleration of the motor is achieved.

In Stage (3), as the rotational speed of the motor increases, and when the first memory address is reached, D7 turns to [1] in this memory address and D6 also turns to [1]. The oscillator switching signal turns to [1] and because the preset signal turns to [1], the oscillator switching line 86 turns on the switch 73 to activated the relatively fast speed oscillator 72 (200 KHz). At the same time, preset signal becomes [1], and the preset signal line 85 moves the output of the counter 74 to a second address which is a preset value determined by the preset circuit 75. Therefore, the counter output address of the ROM moves to the preset second address.

The motor operates in the steady state from this point on.

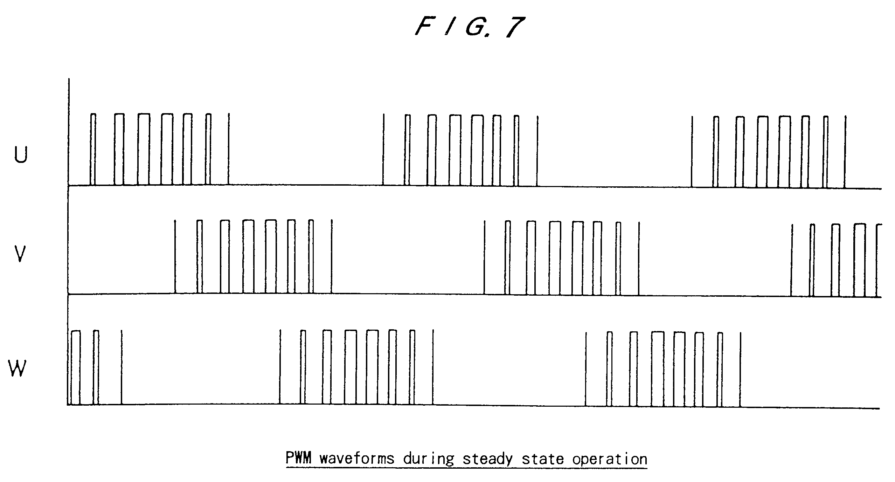

When Stage (4) is reached, the counter 74 is up-counted by the relatively fast speed oscillator 72 (200 KHz) and D5-D0 PWM signals are successively read out so as to generate equivalent sine waves for the steady state operation. The DC voltage pulses are thus applied via the driver 78 to the motor by the power module. Figure 7 explains the PWM waveforms during the steady state operation of the motor. In each of the phases U, V and W, DC voltage pulses of the amplitude and time width shown in this illustration are applied to the motor 1. The motor 1 is an inductive load, and the waveform in each phase becomes close to a sine wave.

When one cycle portion of the steady-state stage is completed in (4), the memory address becomes a third address, and at this point in time, the preset signal becomes [1].

Therefore, the counter address is set to the position of a preset value, and the memory address returns to the second address. The next cycle of the steady-state stage begins at this point in time, and henceforth the stage (4) is repeated.

Figure 3 is an example of the methodology for rotation control of the motor of the embodiment of the present invention. During the period from the initial stage (1) to the acceleration stage (2), the signals from the relatively slow speed (10 KHz) oscillator 71 are used to drive the counter 74, permitting to generate PWM signals having a long time width (100 µS). This is effective in achieving fine control over the rotational speed in the slow speed range with the use of a relatively small amount of memory capacity. In stage (3), when the first address of the ROM is reached, the oscillator switching signal becomes [1], and the oscillator is switched to the relatively fast speed clocking (200 KHz). This is followed by stage (4) which is repeated to maintain the highspeed steady-state rotation of the motor. In this stage, the PWM signals are of short duration (5 µS). This approach enables to perform highspeed rotation control with a relatively small amount of memory capacity.

The above methodology of soft-start allows an increase in the rotational speed and voltage gradually over a given start- up time interval T_{A}, thus enabling to avoid an electrical problem of surging current during the acceleration stage while achieving smooth mechanical acceleration of the pump. Similarly, it should be noted that the inverter unit 54 can also be provided with a soft-stop capability, as illustrated in Figure 4. When the motor is in the steady-state stage (4) revolving at a constant speed, a stop signal may be given in stage (5). In the deceleration stage (6), ROM 76 in the PWM signal generator 69 lowers the signal frequency and voltage, and in the stopping stage (7), the frequency and voltage are decelerated to be zero. Thus, the motor speed is gradually reduced from stage (5) to stage (7), during a time interval T_{B}. Accordingly, it becomes possible to prevent sudden changes in operating pressures at the intake and discharge sections, thereby minimizing externally-generated pressure disturbances in the piping connected to the motor.

Next, the protective actions performed by such means as the current detector and voltage detector will be explained. First, a current detector 70 is provided in the DC section to measure the current flowing therein, and the measured value of the current is reported to the control device 68. The control device 68 judges whether or not the reported current is excessive, and if it is excessive, the control device 68 outputs a stop signal to the PWM signal generator 69, thereby turning off the inverter section 66 and nullifying the AC output therefrom to protect the motor 1 and the inverter unit 54.

Also, the control device 68 compares the reported value of the current from the current detector 70 with a predetermined standard value for the current, and if necessary, the control device 68 reduces the frequency/voltage output from the inverter section 66. That is, when an excessive current is detected by the current detector 70, the control device 68 commands the PWM signal generator 69 so as to output signals less than the standard values of frequency/voltage from the inverter section 66. Accordingly, when the operating condition of the motor is such that the current flow exceeds the standard value, the voltage and the frequency are reduced, thereby lowering the load and protecting the motor 1, the inverter section 66 and the pump P.

Further, by providing current detectors 91, 92 and 93 in the primary side and current detectors 94, 95 and 96 in the secondary side of the inverter unit 54, as shown in Figure 2, a phase interruption in the primary side can be detected by one of the current detectors 91, 92 and 93, and similarly, a phase interruption in the secondary side by one of the current detectors 94, 95 and 96. It is also possible to detect a phase interruption by the voltage detectors 97, 98 in the primary side and by the voltage detectors 99, 100 in the secondary side. In either case, when the control device 68 judges that a phase interruption condition exists according to a signal from any one of the detectors, the control device 68 turns off the inverter section 66 thereby stopping the motor 1. Accordingly, when a phase is interrupted to be open either in the primary or the secondary side of the inverter unit 54, the operation of the pump P can be stopped quickly, thereby preventing damage to the pump, motor and the inverter unit.

In other instances of protection during an operation under standard frequency/voltage conditions, if the current detector 70 detects that the current value is less than the current value required under the standard load, the pump may be suspected to be experiencing a no-load condition. In such a case, the controller commands the inverter 66 to be turned off thereby stopping the motor 1.

In other instances of protection during the initial soft- start-up of the pump P, the output frequency/voltage from the inverter section 66 are kept constant within a specified interval T_{C} during the start-up time span T_{A}. The current value is detected by the current detector 70, if the current reading is lower than that expected according to the output voltage of the inverter section 66, then the motor may also be operating with no-load. As before, the inverter section 66 is turned off, thereby protecting the motor 1 and the pump P.

Other protection measures are related to a fluid-level detector provided in the pump P shown in Figure 1. The signal from the fluid-level detector is forwarded to the control device 68 in the inverter unit 54, and if the pump is not full, the inverter section 66 is turned off, thereby turning off the motor 1 and the pump P and preventing no-load operation of the pump P.

The protective device presented above is particularly useful for preventing a no-load operation of a sealed motor having self-lubricating type bearings, because the bearing can be seriously damaged otherwise. The control device 68 is provided with means to detect that the current value under the standard voltage/frequency operation is lower than the preset value, and to stop the output signal to the motor. This function also detects a no-load operation of the pump P, and disallowing the operation of the pump P until the standard frequency/voltage conditions are re-established.

Other protective measures are related to control over time intervals. During a certain time interval in the soft-start stage over a time span, the control device 68 monitors the current passing through the current detectors 94, 95 and 96 to ascertain that the current values are standard values. If the measured current value is less than the standard current value, the control device 68 commands the PWM signal generator to stop outputting a signal to the motor. This function is useful in detecting a no-load condition early in the soft start stage, and stopping the motor before the motor is given a sufficient time to fully increase its rotational speed.

Other protective measure is related to thermal protection. A thermal sensor is provided on the stator winding, and its output line is connected to the control device 68 so that when a pre-determined temperature is reached in the winding, the output signal to the motor is stopped.

The embodiment is demonstrated using a PWM inverter unit included in a peripheral flow type dual intake pump. However, it is clear that the pump is not limited to the type presented above, and the invention is applicable widely to various other types of fluid handling pumps. Also, the embodiment is illustrated with an 8-bit PWM type inverter, but other types of inverters can also be used. It is also clear that the inverter unit need not be housed in the pump, but can be provided as a separate unit. It should thus be clear that the approach to providing soft-start and soft-stop controls of fluid handling pump motor separately and independently of the commercial power supply source with the use of the inverter unit of the present invention can be modified in various ways within the basic concept outlined above.

It should be noted that the objects and advantages of the invention may be attained by means of any compatible combination(s) particularly pointed out in the items of the following summary of the invention and the appended claims.

### The invention may be summarized as follows:

1. An inverter unit for use in controlling a fluid handling pump driven by an electric motor comprising:
   a converter section for rectifying a three-phase commercial alternating power and converting to a direct current power; and
   an inverter section for generating a three-phase alternating current power having a specific frequency value and a specific voltage value, from said direct current power produced in said converter section; wherein said three-phase alternating current power provides alternating current power of a defined phase relationship to said electric motor in accordance with signals from a controller device, independently of the connecting lines of said three-phase commercial alternating power.
2. An inverter unit as in 1, wherein said inverter unit is further provided with control means for commanding said specific frequency value and said specific voltage value generated by said inverter unit; and
   soft-start means for controlling said inverter unit so as to provide, within a pre-determined time interval, a gradual increase in the power applied to the electric motor up to said specific frequency and said specific voltage, during a time span required for the electric motor to reach a full running stage.
3. An inverter unit as in 1, wherein said inverter unit is further provided with control means for commanding said specific frequency value and said specific voltage value generated by said inverter unit; and
   soft-stop means for controlling said inverter unit so as to provide, within a pre-determined time interval, a decrease in the power applied to said electric motor down from said specific frequency value and said specific voltage value, during a time span required for said electric motor to come to a full stop.
4. An inverter unit as in 1 to 3, wherein said inverter unit is provided with overcurrent detection means for reducing an output level of said inverter unit when overcurrent is detected.
5. An inverter unit as in 4, wherein a means is provided to reduce output frequency and voltage values from said inverter unit so as to obtain a pre-determined standard current value.
6. An inverter unit as in 1 to 3, wherein said inverter unit is provided with means for detecting a phase interruption condition, in the primary and the secondary circuits of the inverter unit, and stopping said electric motor when said phase interruption condition is detected.
7. An inverter unit as in 1 to 3, wherein said inverter unit is provided with means for detecting a no-load condition and stopping said electric motor when said no-load condition is detected.
8. An inverter unit as in 1 to 3, wherein said inverter unit is provided with a current detector for stopping an output signal to said fluid handling pump when a measured current value is lower than a pre-determined value of current.
9. An inverter unit as in 2, wherein said time span includes a period in which said inverter unit outputs constant values of frequency and voltage, and a means is provided for detecting that a value of the current during said time span is lower than a pre-determined value of the current and stopping delivery of said three-phase driving power to said electric motor.
10. An inverter unit as in 1 to 3, wherein said fluid handling pump is provided with a fluid level detector for detecting no-load condition in said fluid handling pump and stopping delivery of output power to said electrical motor.
11. An inverter unit as in 1 to 3, wherein stator winding of said electrical motor is provided with a thermal protector means for detecting a temperature of said stator winding so as to stop delivery of output power to said electrical motor when said temperature exceeds a pre-determined temperature.
12. An inverter unit as in 1 to 3, wherein said inverter unit generates output signals, relating an output frequency value and an output voltage value, which are unilaterally-determined.
13. An inverter unit as in 1 to 3, wherein said inverter unit generates an output signal relating an output frequency value and an output voltage value in a digital form, not in an analogue form.
14. A fluid handling pump provided with an inverter unit as claimed in claims 1 to 13, wherein said fluid handling pump is a peripheral flow type pump.
15. A fluid handling pump provided with an inverter unit as claimed in claims 1 to 13, wherein said fluid handling pump is provided with a hermetically sealed motor having self-lubricating bearings.
16. A fluid handling pump provided with an inverter unit as claimed in claim 14, wherein said inverter unit is disposed on an external surface of said peripheral flow type pump.
17. A fluid handling pump provided with an inverter unit as claimed in claim 16, wherein said inverter unit is disposed in an area of said fluid handling pump not adversely affected by discharge pressure of said peripheral flow type pump.

## Claims

1. An inverter unit for use in controlling a fluid handling pump driven by an electric motor comprising:
a converter section for rectifying a three-phase commercial alternating power and converting to a direct current power; and
an inverter section for generating a three-phase alternating current power having a specific frequency value and a specific voltage value, from said direct current power produced in said converter section; wherein said three-phase alternating current power provides alternating current power of a defined phase relationship to said electric motor in accordance with signals from a controller device, independently of the connecting lines of said three-phase commercial alternating power.

2. An inverter unit as claimed in claim 1, wherein said inverter unit is further provided with control means for commanding said specific frequency value and said specific voltage value generated by said inverter unit; and
soft-start means for controlling said inverter unit so as to provide, within a pre-determined time interval, a gradual increase in the power applied to the electric motor up to said specific frequency and said specific voltage, during a time span required for the electric motor to reach a full running stage.

3. An inverter unit as claimed in claim 1, wherein said inverter unit is further provided with control means for commanding said specific frequency value and said specific voltage value generated by said inverter unit; and
soft-stop means for controlling said inverter unit so as to provide, within a pre-determined time interval, a decrease in the power applied to said electric motor down from said specific frequency value and said specific voltage value, during a time span required for said electric motor to come to a full stop.

4. An inverter unit as claimed in claims 1 to 3, wherein said inverter unit is provided with overcurrent detection means for reducing an output level of said inverter unit when overcurrent is detected.

5. An inverter unit as claimed in claim 4, wherein a means is provided to reduce output frequency and voltage values from said inverter unit so as to obtain a pre-determined standard current value.

6. An inverter unit as claimed in claims 1 to 3, wherein said inverter unit is provided with means for detecting a phase interruption condition, in the primary and the secondary circuits of the inverter unit, and stopping said electric motor when said phase interruption condition is detected.

7. An inverter unit as claimed in claims 1 to 3, wherein said inverter unit is provided with means for detecting a no-load condition and stopping said electric motor when said no-load condition is detected,
wherein preferably said inverter unit is provided with a current detector for stopping an output signal to said fluid handling pump when a measured current value is lower than a pre-determined value of current,
wherein preferably said time span includes a period in which said inverter unit outputs constant values of frequency and voltage, and a means is provided for detecting that a value of the current during said time span is lower than a pre-determined value of the current and stopping delivery of said three-phase driving power to said electric motor,
wherein preferably said fluid handling pump is provided with a fluid level detector for detecting no-load condition in said fluid handling pump and stopping delivery of output power to said electrical motor,
wherein preferably stator winding of said electrical motor is provided with a thermal protector means for detecting a temperature of said stator winding so as to stop delivery of output power to said electrical motor when said temperature exceeds a pre-determined temperature,
wherein preferably said inverter unit generates output signals, relating an output frequency value and an output voltage value, which are unilaterally-determined, and
wherein said inverter unit preferably generates an output signal relating an output frequency value and an output voltage value in a digital form, not in an analogue form.

8. A fluid handling pump provided with an inverter unit as claimed in claims 1 to 7, wherein said fluid handling pump is a peripheral flow type pump.

9. A fluid handling pump provided with an inverter unit as claimed in claims 1 to 7, wherein preferably said fluid handling pump is provided with a hermetically sealed motor having self-lubricating bearings,
wherein preferably said inverter unit is disposed on an external surface of said peripheral flow type pump, and
wherein preferably said inverter unit is disposed in an area of said fluid handling pump not adversely affected by discharge pressure of said peripheral flow type pump.

10. An inverter unit for use in controlling a pump driven by an electric motor comprising:
a converter section for rectifying an alternating power and converting to a direct current power; and
an inverter section for generating an alternating current power having a specific frequency value and a specific voltage value.
